# EUROPEAN PATENT SPECIFICATION

(11) **EP 3 040 224 B1**
(45) Date of publication and mention of the grant of the patent: **01.04.2020**
(21) Application number: 14840506.1
(22) Date of filing: 26.08.2014
(51) Int. Cl.: B60J 5/04, B23K 11/11, B23K 11/14, B23K 33/00

(54) **VEHICULAR DOOR FRAME, AND VEHICULAR DOOR FRAME INTERMEDIARY MEMBER**
FAHRZEUGTÜRRAHMEN UND MITTELGLIED FÜR TÜRRAHMEN
CADRE DE PORTE DE VÉHICULE, ET ÉLÉMENT INTERMÉDIAIRE DE CADRE DE PORTE DE VÉHICULE

(30) Priority: 30.08.2013 JP 2013179164
(43) Date of publication of application: 06.07.2016
(73) Proprietor: Aisin Seiki Kabushiki Kaisha, Kariya-shi, Aichi 448-8650 (JP)
(72) Inventor: SATO, Eisuke, Kariya-shi Aichi-ken 448-8650 (JP); YANAI, Toshifumi, Kariya-shi Aichi-ken 448-8650 (JP)
(74) Representative: Cabinet Beau de Loménie
(86) International application number: PCT/JP2014/072302
(87) International publication number: WO 2015/029999

(56) References cited:
- JP-A- 2008 302 788
- JP-A- 2008 302 788
- JP-A- 2011 068 181
- JP-A- 2012 136 216
- JP-A- 2013 121 754
- JP-A- 2013 121 754
- US-A1- 2007 175 100

## Description

### TECHNICAL FIELD

The present invention relates to a vehicle door frame constituting a window frame of a vehicle door and an intermediary member of the vehicle door frame.

### BACKGROUND ART

Conventionally, a vehicle door frame disclosed in Patent Document 1, for example, is well known. As shown in Fig. 11, the vehicle door frame is formed by including an outer member 110 and an inner member 120, which is coupled to the outer member 110. The outer member 110 constitutes a glass-run housing portion 111 and an ornamental surface 112 on the vehicle outer side. The inner member 120 has a body portion 121, which forms the framework of a window frame.

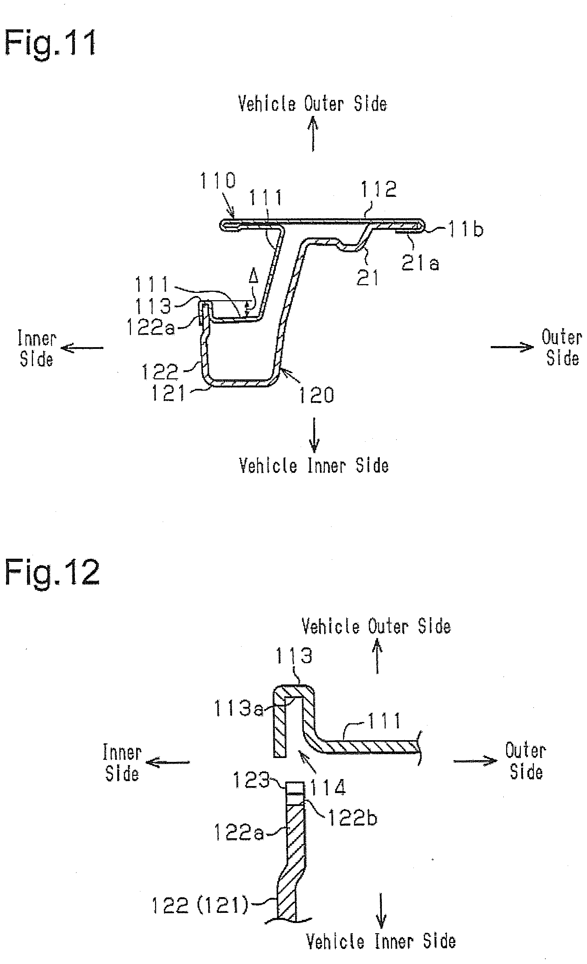

As also shown in Fig. 12, the outer member 110 has a folded portion 113. The folded portion 113 has an opening 114, which opens in the inward direction of the vehicle. The folded portion 113 is formed by bending an edge portion, which constitutes the glass-run housing portion 111, in the outward direction of the vehicle, and then folding back the edge portion in the inward direction of the vehicle. As for the inner member 120, an edge portion 122a of an extended portion 122 of the body portion 121, which extends in the outward direction of the vehicle, is inserted into the opening 114 of the folded portion 113. A projection portion 123 protrudes from a distal end surface 122b of the edge portion 122a of the extended portion 122 in the outward direction of the vehicle. The projection portion 123 is heated and melted by current concentration when a resistance welding is performed. This pressure-bonds the distal end surface 122b and a facing portion 113a of the folded portion 113 to each other.

### PRIOR ART DOCUMENT

### Patent Document

Patent Document 1: Japanese Laid-Open Patent Publication No. 2011-68181

Patent Document JP 2008/302788 is also known and describes another door frame structure of a vehicle.

### SUMMARY OF THE INVENTION

### Problems that the Invention is to Solve

The vehicle door frame according to Patent Document 1 includes the folded portion 113 in the outer member 110. This sections a portion of the glass-run housing portion 111 on the vehicle inner side into two portions, which are one portion within the range of the folded portion 113 and the other portion toward the basal end portion, which is recessed in the inward direction of the vehicle from the folded portion 113 by a distance Δ. Accordingly, when another member is attempted to be attached using a portion of the glass-run housing portion 111 on the vehicle inner side, the attachment of such a member is limited since a flat portion of the glass-run housing portion 111 is limited to the portion toward the basal end portion, which is recessed in the inward direction of the vehicle from the folded portion 113, except for the folded portion 113.

An objective of the present invention is to provide a vehicle door frame and an intermediary member of the vehicle door frame to which another member is simply attached.

### Means for Solving the Problems

To achieve the above described objective, a vehicle door frame according to claim 1 or an intermediary member of the vehicle door frame according to claim 7 is provided. The vehicle door frame or the intermediary member includes: an outer member and an inner member. The outer member constitutes a glass-run housing portion made of a board. The outer member has a basal end portion and is located on a first side. The inner member is made of a board including a body portion and forms a framework of a window frame. The inner member is formed to be coupled to the outer member on a second side that is opposite to the first side. The outer member includes an edge portion, a folded portion, and a return portion. The inner member includes: an extended portion, an edge portion, and a distal end surface. The edge portion constitutes the glass-run housing portion at a position that is apart from the basal end portion. The folded portion is provided on the edge portion and has a substantially U-shaped cross section. The folded portion includes an opening, which opens to the second side, and a first-side end that is positioned nearest to the first side. The return portion is provided at a position that is closer to the basal end portion than the folded portion of the glass-run housing portion. The return portion raises the portion that is closer to the basal end portion than the folded portion of the glass-run housing portion in a flat manner at least to a position of the first-side end of the folded portion. The extended portion is provided on the body portion and extends on the first side. The edge portion is provided on the extended portion and formed to be inserted into the opening of the folded portion. The distal end surface is provided on the edge portion of the extended portion. A projection portion is provided on the distal end surface and protrudes toward the first side. The projection portion is arranged at a predetermined position on the inner member in a longitudinal direction. The projection portion is heated and melted through current concentration when a resistance welding is performed, and the distal end surface and a facing portion of the folded portion are pressure-bonded to each other.

### EFFECTS OF THE INVENTION

The present invention has an advantage in that another member is simply attached.

### BRIEF DESCRIPTION OF THE DRAWINGS

]
Fig. 1 is a side view of a vehicle door, illustrating an upper structure of the vehicle door viewed from the outside of the vehicle in the lateral direction (from the outside of the vehicle) according to one embodiment of the present invention;
Fig. 2 is a cross-sectional view taken along line 2-2 of Fig. 1;
Fig. 3 is a cross-sectional view taken along line 3-3 line of Fig. 1;
Fig. 4 is an exploded cross-sectional view illustrating the embodiment;
Figs. 5A to 5D are cross-sectional views illustrating a joint structure according to the embodiment;
Fig. 6 is a perspective view illustrating an inner member;
Fig. 7 is a cross-sectional view illustrating a modified form of the present invention;
Fig. 8 is a cross-sectional view illustrating another modified form;
Fig. 9 is a cross-sectional view illustrating yet another modified form;
Fig. 10 is a cross-sectional view illustrating yet another modified form;
Fig. 11 is a cross-sectional view illustrating a conventional form; and
Fig. 12 is an exploded cross-sectional view illustrating the conventional form.

### MODES FOR CARRYING OUT THE INVENTION

Hereinafter, a vehicle door frame according to one embodiment of the present invention will be described.

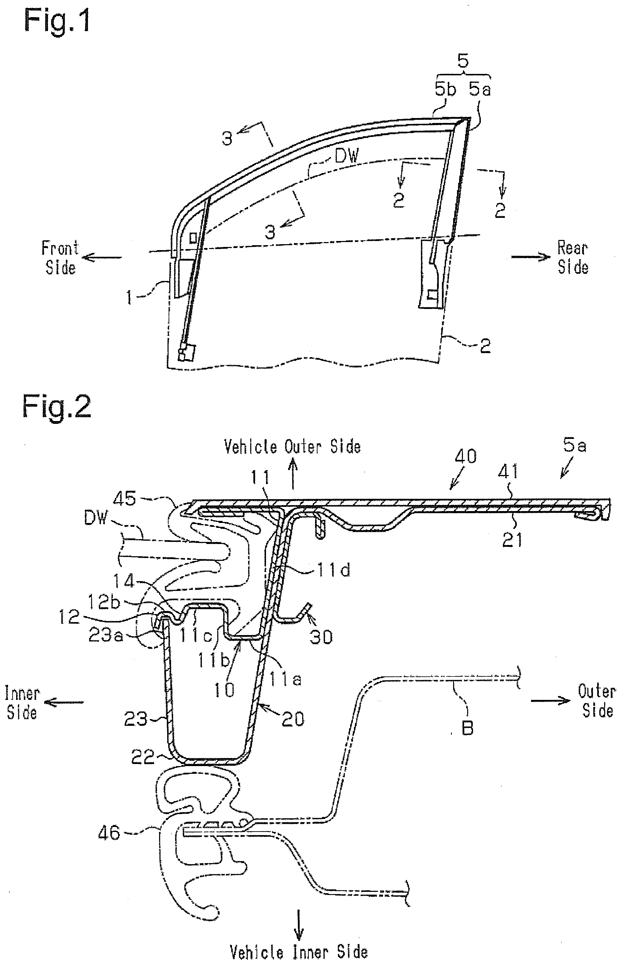

As shown in Fig. 1, a vehicle door 1 supported on the side of a vehicle body includes a door body 2, which forms a lower portion of the vehicle door 1. The door body 2 is a bag-like structure configured by coupling a door outer panel, which forms a door outer plate, and a door inner panel (not shown), which forms a door inner plate. A door window glass DW, which appears and retracts through an upward opening, is provided in the door body 2.

The vehicle door 1 includes a door frame 5, which is attached to an upper end portion of the door body 2 and forms a window frame of the vehicle door 1 (i.e., the frame of the door window glass DW). The door frame 5 includes a post 5a and a substantially arcuate upper rim 5b. The post 5a is fixed to the door body 2 (for example, the door inner panel) in the rear portion in the longitudinal direction of the vehicle and extends in the height direction of the vehicle. The upper rim 5b is fixed to the door body 2 in the front portion in the longitudinal direction of the vehicle and connected to the upper end of the post 5a. The door frame 5 opens downward. The vehicle door 1 of the present embodiment is a front door, and the upper rim 5b and the post 5a of the door frame 5 are arranged to correspond to an A pillar and a B pillar of the vehicle body.

Hereinafter, in the door frame 5, the side facing toward the door window glass DW will be referred to as an inner side, and the opposite side will be referred to as an outer side. The inner side in the vehicle lateral direction facing toward the inside of the passenger compartment will be referred to as a vehicle inner side (a second side), and the outer side in the vehicle lateral direction facing toward the outside of the passenger compartment will be referred to as a vehicle outer side (a first side).

As shown in Fig. 2, the post 5a includes an outer member 10 formed by press-molding a board such as a steel plate, an inner member 20 formed by press-molding the same board, a sealing member housing portion 30 with a substantially C-shaped cross section, which opens outward, and an ornamental member 40 arranged on the vehicle outer side, which extends from the outer portion to the inner portion of the door frame 5. The outer member 10 is located on the vehicle outer side and the inner member 20 is formed such that it is coupled to the outer member 10 on the vehicle inner side opposite the vehicle outer side. Before the inner member 20 is coupled to the outer member 10, the outer member 10 and the inner member 20 form an intermediary member of the door frame.

The thickness of the inner member 20 is set greater than the thickness of the outer member 10. The end surface of the ornamental member 40 exposed on the vehicle outer side provides an ornamental surface 41 of the post 5a. The width of the ornamental surface 41 gradually changes in accordance with the height direction of the vehicle to improve the ornamental property.

The outer member 10 includes a glass-run housing portion 11 with a substantially U-shaped cross section, which opens in the inward direction. The glass-run housing portion 11 includes a basal end portion 11d located on the outer side. The glass-run housing portion 11 includes a first side wall portion 11a, which extends from the outer portion toward the inner portion along the portion on the vehicle inner side, a stepped wall portion 11b, which is continuous with the inner end of the first side wall portion 11a and bends in the outward direction of the vehicle, and a second side wall portion 11c, which is continuous with the end of the stepped wall portion 11b on the vehicle outer side and extends from the outer portion toward the inner portion. That is, the second side wall portion 11c protrudes with respect to the first side wall portion 11a by the size of the stepped wall portion 11b in the outward direction of the vehicle.

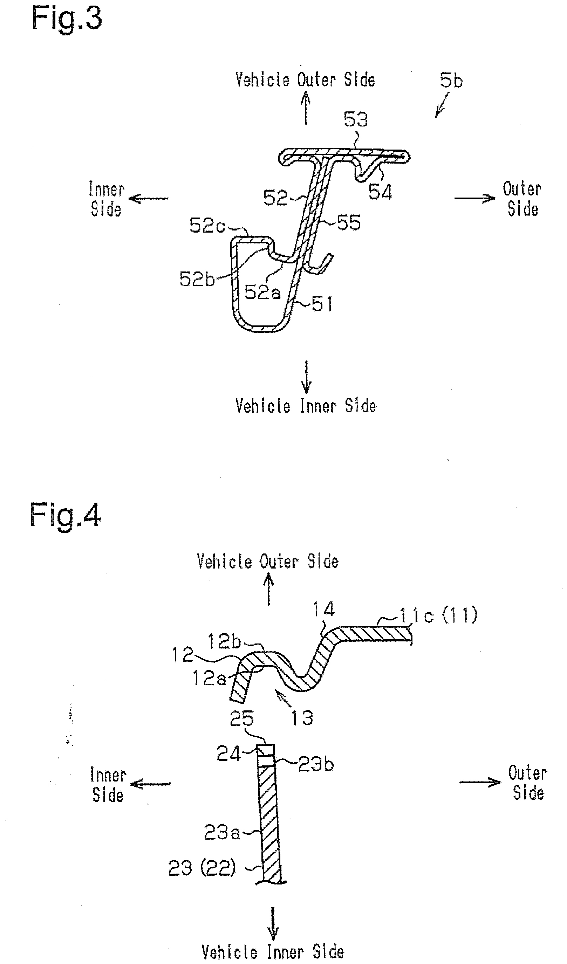

As shown in Fig. 4, a folded portion 12, which is bent in the outward direction of the vehicle and then folded in the inward direction of the vehicle, is provided on the edge portion of the side wall portion 11c. The folded portion 12 has an opening 13 with a substantially U-shaped cross section, which opens in the inward direction of the vehicle. The folded portion 12 includes an end 12b (first-side end) on the vehicle outer side, which is located in the outermost portion of the folded portion 12 on the vehicle outer side. The second side wall portion 11c includes a return portion 14, which is connected to an end of the folded portion 12 on the vehicle inner side and inclined in the outward direction of the vehicle in accordance with the outward direction. The return portion 14 extends to a position on the vehicle outer side slightly away from the position of the end 12b of the folded portion 12 on the vehicle outer side. That is, a portion of the second side wall portion 11c that is outward from the folded portion 12, i.e., a portion of the glass-run housing portion 11 that is closer to the basal end portion 11d than the folded portion 12, is raised in a flat manner to a position on the vehicle outer side from the position of the end 12b of the folded portion 12 on the vehicle outer side with the return portion 14.

As shown in Fig. 2, the inner member 20 includes an attaching portion 21 and a body portion 22 with a substantially rectangular cross section. The attaching portion 21 and the body portion 22 are integrally formed with each other. The attaching portion 21 extends from the outer portion toward the inner portion along the portion of the glass-run housing portion 11 on the outer side and the portion of the ornamental member 40 on the vehicle inner side. The body portion 22 is continuous with the inner end of the attaching portion 21, bent in the inward direction of the vehicle and then folded from the portion on the inner side to the portion on the vehicle outer side to face toward the opening 13 of the folded portion 12. The body portion 22 provides the framework of the post 5a and includes an extended portion 23, which extends from the portion on the vehicle inner side to the portion on the vehicle outer side on the inner side. As for the inner member 20, an edge portion 23a of the extended portion 23 to be inserted into the opening 13 is coupled to the folded portion 12 by welding such that a portion of the body portion 22 on the vehicle outer side contacts the outer member 10 from the outer portion.

A sealing member housing portion 30 contacts a portion of the body portion 22 on the vehicle outer side. The sealing member housing portion 30 and the outer member 10 are coupled to the body portion 22 by welding, for example.

A glass-run 45 with a substantially U-shaped cross section made of, e.g., a rubber material is fluid-tightly provided along the entire length of the glass-run housing portion 11 in the longitudinal direction. The glass-run 45 protrudes toward a portion at least inward from the opening end of the glass-run housing portion 11 to prevent the infiltration of water into the glass-run housing portion 11. In particular, the end portion of the glass-run 45 on the vehicle inner side is located in the inward direction of the vehicle from the folded portion 12 of the outer member 10 and the edge portion 23a of the extended portion 23 of the inner member 20. This prevents the infiltration of water into the inner space of the post 5a. Both of the circumferential edges of the door window glass DW on the vehicle outer side and the vehicle inner side elastically contact the glass-run 45. The glass-run 45 elastically holds the door window glass DW such that the door window glass DW is opened and closed. A body sealing member 46, which fluid-tightly contacts the body portion 22 along substantially the entire length of the inner member 20 in the longitudinal direction, is held by an opening circumferential edge portion B of the vehicle body facing the post 5a (the vehicle door 1). Accordingly, the space between the post 5a and the opening circumferential edge portion B are fluid-tightly separated by the body sealing member 46 on the vehicle outer side and on the vehicle inner side.

As shown in Fig. 3, the upper rim 5b is formed by roll-molding a board such as a steel plate, and has a substantially even cross section over substantially the entire length of the upper rim 5b in the longitudinal direction. The upper rim 5b includes an upper body portion 51, an upper glass-run housing portion 52, which is continuous with an end of the upper body portion 51 on the vehicle outer side, an upper ornamental portion 53, which is continuous with an inner end of the upper glass-run housing portion 52 on the vehicle outer side, a connecting portion 54, which is continuous with an outer end of the upper ornamental portion 53, and an upper sealing member housing portion 55, which is continuous with an inner end of the connecting portion 54.

The upper body portion 51 is shaped to conform to the shape of the body portion 22 at a connecting position in which the upper rim 5b is connected to the post 5a. The upper body portion 51 extends from the portion on the vehicle outer side toward the portion on the vehicle inner side and is folded from the portion on the inner side toward the portion on the vehicle outer side to present a substantially rectangular cross section. The upper body portion 51 forms the framework of the upper rim 5b. The upper glass-run housing portion 52 is also shaped to conform to the shape of the glass-run housing portion 11 at a connecting position in which the upper rim 5b is connected to the post 5a. The upper glass-run housing portion 52 presents a substantially U-shaped cross-section, which opens inward. Accordingly, the upper glass-run housing portion 52 also includes, in the vehicle inner direction, a first side wall portion 52a, which extends from the outer portion toward the inner portion, a stepped side wall portion 52b, which is continuous with an inner end of the first side wall portion 52a and bent in the outward direction of the vehicle, and a second side wall portion 52c, which is continuous with an end of the stepped wall portion 52b on the vehicle outer side and extends from the outer portion toward the inner portion. However, the second side wall portion 52c extends in the inward direction from the stepped wall portion 52b in a straight manner and is connected to an end of the upper body portion 51 on the vehicle outer side. That is, the second side wall portion 52c lacks a portion such as the folded portion 12 of the second side wall portion 11c of the outer member 10 for a joint with a portion of the body portion 22 of the inner member 20.

The upper ornamental portion 53 is shaped to conform to the shapes of a portion of the glass-run housing portion 11 on the vehicle outer side and the attaching portion 21 at a connecting position in which the upper rim 5b is connected to the post 5a. The upper ornamental portion 53 extends from the inner portion toward the outer portion along the portion of the upper glass-run housing portion 52 on the vehicle outer side. The connecting portion 54 extends from the outer portion toward the inner portion along the portion of the upper ornamental portion 53 on the vehicle inner side and is inclined in the inward direction of the vehicle in accordance with the inward direction. The upper sealing member housing portion 55 is shaped to conform to the shape of the sealing member housing portion 30 at a connecting position in which the upper rim 5b is connected to the post 5a. The upper sealing member housing portion 55 presents a substantially C-shaped cross section, which opens outward.

The outer portion of the upper glass-run housing portion 52 and the inner portion of the upper sealing member housing portion 55 sandwich the portion of the upper body portion 51 on the vehicle outer side from the inner side and the outer side and are coupled thereto by welding, for example.

The inner member 20 of the post 5a is temporarily coupled to the outer member 10 by inserting the edge portion 23a of the extended portion 23 into the opening 13 of the folded portion 12 such that the portion of the body portion 22 on the vehicle outer side is brought into contact with the outer portion of the outer member 10 from the outer side. Hereinafter, the joint structure between the folded portion 12 and the edge portion 23a of the extended portion 23 inserted into the opening 13 according to the temporary coupling of the outer member 10 and the inner member 20 will be described.

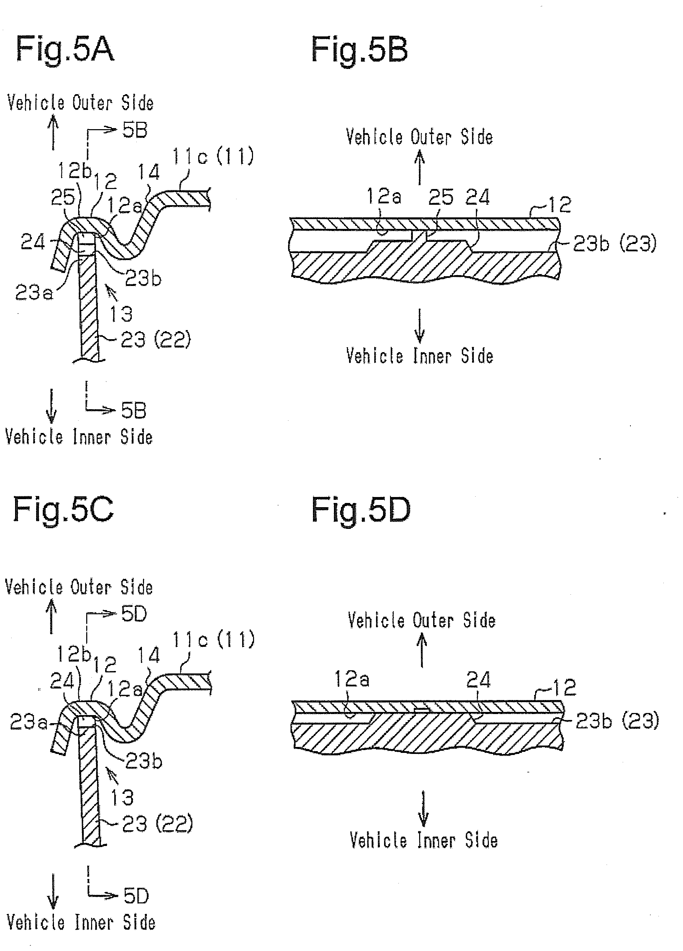

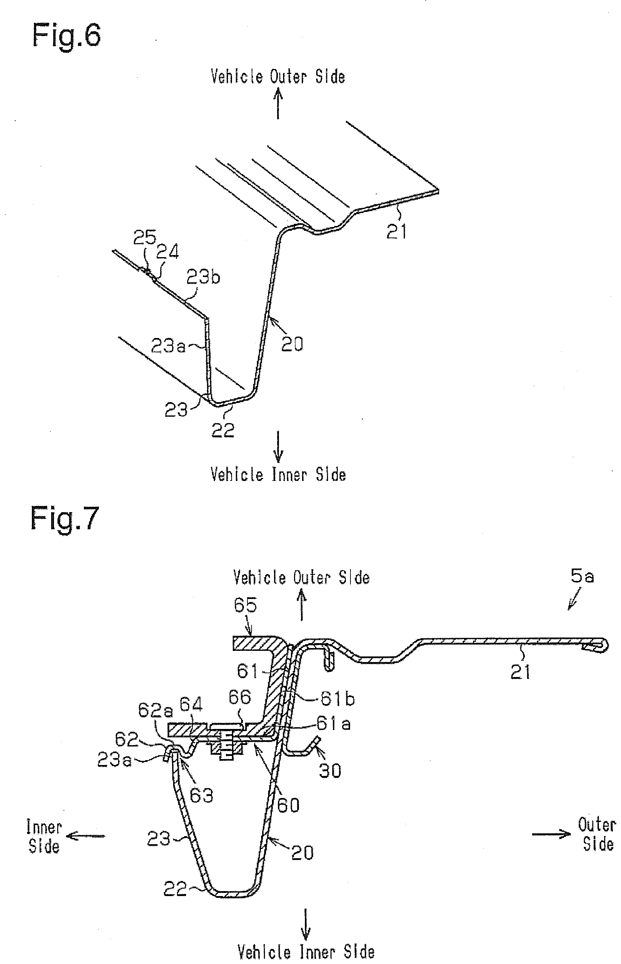

As shown in Fig. 6, a plurality of basal portions 24, which protrudes in a trapezoidal manner in the outward direction of the vehicle, are provided on the distal end surface 23b of the edge portion 23a of the extended portion 23 in the longitudinal direction of the inner member 20. Also, a projection portion 25, which further protrudes in the outward direction of the vehicle, is provided on the central portion of each basal portion 24 in the longitudinal direction. As shown in Figs. 5A and 5B, in the temporary coupling stage of the outer member 10 and the inner member 20, the edge portion 23a of the extended portion 23 is inserted into the opening 13 of the folded portion 12. In this state, the projection portion 25 is in contact with the facing portion 12a (bottom of the folded portion) of the folded portion 12 such that the facing portion 12a and each basal portion 24 (distal end surface 23b) define a gap therebetween in the vehicle inward and outward direction.

In the temporary coupling state, the folded portion 12 and the extended portion 23 are sandwiched and pressed by two welding electrodes (not shown) of a resistance welding device, and a welding current flows between the two welding electrodes. Accordingly, as shown in Figs. 5C and 5D, the projection portion 25 is heated and melted according to the current concentration when the resistance welding is performed. This finally brings the facing portion 12a of the folded portion 12 into contact with the basal portion 24 to pressure-bond the basal portion 24 (distal end surface 23b) to the facing portion 12a of the folded portion 12. That is, the projection portion 25 serves as a projection of resistance welding (i.e., projection welding). The outer member 10 and the inner member 20 are then coupled to each other. At this time, the facing portion 12a and the distal end surface 23b define a gap in the vehicle inward and outward direction. This prevents the facing portion 12a and the distal end surface 23b from contacting each other. That is, the basal portion 24 serves as a reference position in which the folded portion 12 (outer member 10) and the extended portion 23 (inner member 20) are positioned when coupling the folded portion 12 and the extended portion 23 with each other.

An operation of the present embodiment will now be described.

As described above, the cross section of the upper rim 5b is shaped to conform to the cross-sectional shape of the post 5a at a connecting position in which the upper rim 5b is connected to the post 5a. According to the present embodiment, the distal end surfaces of the post 5a and the upper rim 5b are joined and coupled to each other by welding at the connecting position.

The portion of the second side wall portion 11c that is outward from the folded portion 12 is raised in a flat manner to a position on the vehicle outer side away from the position of the end 12b of the folded portion 12 on the vehicle outer side with the return portion 14. That is, with the return portion 14, the portion of the second side wall portion 11c that is outward from the folded portion 12 is a flat portion that is not recessed in the inward direction of the vehicle from the end 12b of the folded portion 12 on the vehicle outer side. The flat portion contacts the second side wall portion 52c of the upper rim 5b at the connecting position in which the post 5a is connected to the upper rim 5b so that the flat portion is used as a tab to be coupled (tab to be welded) with the second side wall portion 52c.

The above described embodiment has the following advantages.
(1) According to the present embodiment, the portion of the second side wall portion 11c that is closer to the basal end portion 11d than the folded portion 12 is used as a tab to be coupled (tab to be welded) with the second side wall portion 52c of the upper rim 5b. That is, the range of welding at the time of joining the post 5a and upper rim 5b by welding is increased. This allows the upper rim 5b to be easily attached to the post 5a.
(2) According to the present embodiment, the cross section of the second side wall portion 11c of the glass-run housing portion 11 is shaped to substantially conform to the cross-sectional shape of the second side wall portion 52c of the upper glass-run housing portion 52 to join the post 5a and the upper rim 5b with each other. This limits generation of an uneven portion at the connecting position (corner portion) and generation of noise such as wind noise when running the vehicle, for example.

The above described embodiment may be modified as follows.

As shown in Fig. 7, as an outer member 60, a member including a glass-run housing portion 61 with a substantially L-shaped cross section may be employed. The glass-run housing portion 61 includes a basal end portion 61b located on the outer side. Also, the glass-run housing portion 61 includes a side wall portion 61a, which extends from the outer portion toward the inner portion in the inward direction of the vehicle. A folded portion 62, which is bent in the outward direction of the vehicle and then folded in the inward direction of the vehicle, is provided on the edge portion of the side wall portion 61a. The folded portion 12 has an opening 63, which opens in the inward direction of the vehicle. The side wall portion 61a includes a return portion 64, which is connected to an end of the folded portion 12 on the vehicle inner side and inclined in the outward direction of the vehicle in accordance with the outward direction. The return portion 64 extends to a position on the vehicle outer side slightly away from the position of the end 62a (first-side end) of the folded portion 62 on the vehicle outer side. That is, a portion of the side wall portion 61a that is outward from the folded portion 62, i.e., a portion of the glass-run housing portion 61 that is closer to the basal end portion 61b than the folded portion 62, is raised in a flat manner to a position on the vehicle outer side from the position of the end 62a of the folded portion 62 on the vehicle outer side with the return portion 64. The joint structure between the folded portion 62 and the edge portion 23a of the extended portion 23 of the inner member 20 is the same as that of the above described embodiment. Accordingly, the description thereof is omitted.

A channel 65 with a substantially U-shaped cross section as another member, which opens inward, is attached to the glass-run housing portion 61. That is, the channel 65 is coupled to the glass-run housing portion 61 by a fixing portion 66 as a coupling portion extending through the channel 65 and the glass-run housing portion 61 in the vehicle inward and outward direction such that an outer portion of the channel 65 contacts an outer portion of the glass-run housing portion 61 from the inner side and a portion of the channel 65 on the vehicle inner side contacts the side wall portion 61a from the portion on the vehicle outer side. That is, with the return portion 64 which is outward from the folded portion 62, a flat portion of the side wall portion 61a is used as a tab to be coupled to the channel 65. As described above, the channel 65 is simply attached to the glass-run housing portion 61 by the fixing portion 66 by using the flat portion of the glass-run housing portion 61 at a position that is closer to the basal end portion 61b than the folded portion 62 (return portion 64). The channel 65 is for guiding the movement of the door window glass DW. The coupling portion is not limited to the fixing portion 66. The coupling may be performed by welding such as laser welding. In the inward and outward direction, the fixing portion 66 is arranged inward from an inner end of the channel 65 on the vehicle outer side. Accordingly, when the fixing portion is inserted through the portion of the channel 65 on the vehicle inner side, the fixing portion is inserted and fixed into the channel 65 without being interfered with by a portion of the channel 65 on the vehicle outer side. This improves attaching of the channel 65 with respect to the glass-run housing portion 61.

As In the previous embodiment, when the post including the above-described outer member 60 is coupled to the upper rim by welding such that the distal end surfaces of the post and the upper rim are butted to each other, a flat portion of the side wall portion 61a that is outward from the folded portion 62 is used as a tab to be welded (tab to be coupled) with the upper rim.

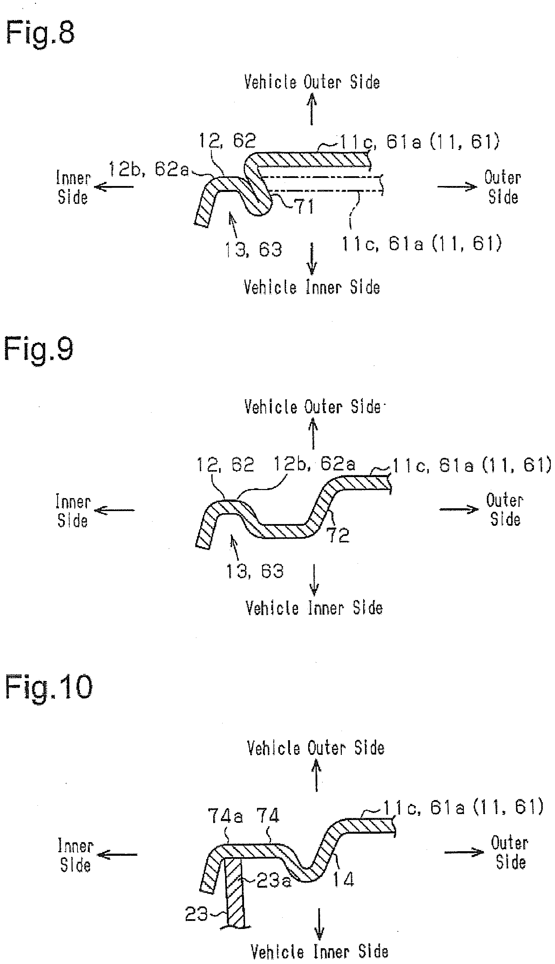

As shown in Fig. 8, a return portion 71, which extends in the outward direction of the vehicle such that the return portion 71 is layered with the folded portion 12 or 62, may be employed. In this case, the portion of the glass-run housing portion 11 or 61 that is outward from the folded portion 12 or 62 is raised in a flat manner such that it is sealingly adhered to the folded portion 12 or 62. Accordingly, the flat portion of the side wall portion 11c or 61a extends to an inner position in which it is sealingly adhered to the folded portion 12 or 62. This further enlarges a tab to be coupled to another member such as the upper rim. This further allows simple attaching of another member.

As shown by a long dashed double-short dashed line, the position on the vehicle outer side in which the portion of the glass-run housing portion 11 or 61 that is outward from the folded portion 12 or 62 is raised in a flat manner with the return portion 71 may correspond to a position of the end 12b or 62a of the folded portion 12 or 62 on the vehicle outer side. In this case, the folded portion 12 or 62 and the portion that is outward from the folded portion 12 or 62 may be used as a tab to be coupled to another member. This yet further allows simple attaching of another member.

As shown in Fig. 9, a return portion 72, which extends in the outward direction of the vehicle from a starting point that is a position that is shifted outward from the folded portion 12 or 62, may be employed.

As shown in Fig. 10, a folded portion 74, which extends in a direction in which a width of an opening of the folded portion 74 is increased such that a gap is defined between the folded portion 74 and the extended portion 23, may be employed. The folded portion 74 includes an end 74a on the vehicle outer side.

A return portion, which raises a portion of the glass-run housing portion that is closer to the basal end portion than the folded portion in a flat manner to a position of an end of the folded portion on the vehicle outer side, may be employed.

In the above described embodiment, the basal portion 24 may be omitted such that the projection portion 25 may be directly provided on the distal end surface 23b to protrude from the distal end surface 23b.

In the above described embodiment, the outer member 10 or the inner member 20 may be formed by roll-molding a board. In this case, the outer member 10 or the inner member 20 may have a constant cross-sectional shape in the longitudinal direction.

The present invention may be applied to a door frame of a rear door, for example.

### Description of the Reference Numerals

1...vehicle door, 5...door frame, 5a...post, 5b...upper rim (another member), 10, 60...outer member (intermediary member of a vehicle door frame), 11, 61...glass-run housing portion, 12, 62, 74...folded portion, 12a...facing portion, 13, 63...opening, 14, 71, 72...return portion, 20...inner member (intermediary member of a vehicle door frame), 22...body portion, 23...extended portion, 23a...edge portion, 23b...distal end surface, 25...projection portion, 65...channel (another member), and 66...fixing portion (coupling portion).

## Claims

1. A vehicle door frame, comprising:
an outer member (10; 60), which constitutes a glass-run housing portion (11; 61) made of a board, wherein the outer member (10; 60) has a basal end portion (11d; 61b) and is located on a first side;
an inner member (20) made of a board including a body portion (22), which forms a framework of a window frame, wherein the inner member (20) is coupled to the outer member (10; 60) on a second side that is opposite to the first side, wherein
the outer member (10; 60) includes
an edge portion, which constitutes the glass-run housing portion (11; 61) at a position that is apart from the basal end portion (11d; 61b),
a folded portion (12; 62; 74), which is provided on the edge portion and has a substantially U-shaped cross section, wherein the folded portion (12; 62; 74) includes an opening (13; 63), which opens to the second side, and a first-side end (12b; 62a; 74a) that is positioned nearest to the first side, and
a return portion (14; 64; 71; 72) provided at a position that is closer to the basal end portion (11d; 61b) than the folded portion (12; 62; 74) of the glass-run housing portion (11; 61),
the inner member (20) includes
an extended portion (23), which is provided on the body portion (22) and extends on the first side;
an edge portion (23a), which is provided on the extended portion (23) and configured to be inserted into the opening (13; 63) of the folded portion (12; 62; 74), and
a distal end surface (23b), which is provided on the edge portion (23a) of the extended portion (23), wherein
a projection portion (25) is provided on the distal end surface (23b) and protrudes toward the first side,
the projection portion (25) is arranged at a predetermined position on the inner member (20) in a longitudinal direction, and
the projection portion (25) is configured to be heated and melted through current concentration when a resistance welding is performed, and the distal end surface (23b) and a facing portion of the folded portion (12; 62; 74) are pressure-bonded to each other,
the vehicle door frame being **characterized in that**
the return portion (14; 64; 71; 72) is configured to raise the portion that is closer to the basal end portion (11d; 61b) than the folded portion (12; 62; 74) of the glass-run housing portion (11; 61) in a flat manner to a position on a vehicle outer side away from the position of the first-side end (12b; 62a; 74a) of the folded portion (12; 62; 74).

2. The vehicle door frame according to claim 1, wherein the glass-run housing portion (11; 61) includes a coupling portion (66), which couples a channel (65) with a portion that is closer to the basal end portion (11d; 61b) than the folded portion (12, 62) of the glass-run housing portion (11; 61), wherein the channel (65) is configured to guide a movement of a door window glass provided on the window frame in an openable and closable manner.

3. The vehicle door frame according to claim 1 or 2, wherein the return portion (71) is configured to raise the portion that is closer to the basal end portion (11d; 61b) than the folded portion (12, 62) to a position on a vehicle outer side away from the position of the first-side end (12b; 62a) of the folded portion (12, 62) in a state in which the return portion (71) is layered with the folded portion (12, 62).

4. The vehicle door frame according to any one of claims 1 to 3, wherein the outer member (10; 60) has a glass-run housing portion (11; 61) with a substantially L-shaped cross section.

5. The vehicle door frame according to any one of claims 1 to 4, wherein the return portion (72) extends toward the first side from a starting point that is a position that is shifted from the folded portion (12, 62) toward the basal end portion (11d; 61b).

6. The vehicle door frame according to any one of claims 1 to 5, wherein the folded portion (74) extends in a direction in which a width of the opening (13; 63) is increased such that a gap is defined between the folded portion (74) and the extended portion (23).

7. An intermediary member of a vehicle door frame, comprising:
an outer member (10; 60), which constitutes a glass-run housing portion (11; 61) made of a board, wherein the outer member (10; 60) has a basal end portion (11d; 61b) and is located on a first side;
an inner member (20) made of a board including a body portion (22), which forms a framework of a window frame, wherein the inner member (20) is coupled to the outer member (10; 60) on a second side that is opposite to the first side, wherein
the outer member (10; 60) includes
an edge portion, which constitutes the glass-run housing portion (11; 61) at a position that is apart from the basal end portion (11d; 61b),
a folded portion (12; 62; 74), which is provided on the edge portion and has a substantially U-shaped cross section, wherein the folded portion (12; 62; 74) includes an opening (13; 63), which opens to the second side, and a first-side end (12b; 62a; 74a) that is positioned nearest to the first side, and
a return portion (14; 64; 71; 72) provided at a position that is closer to the basal end portion (11d; 61b) than the folded portion (12; 62; 74) of the glass-run housing portion (11; 61),
the inner member (20) includes
an extended portion (23), which is provided on the body portion (22) and extends on the first side;
an edge portion (23a), which is provided on the extended portion (23) and configured to be inserted into the opening (13; 63) of the folded portion (12; 62; 74), and
a distal end surface (23b), which is provided on the edge portion (23a) of the extended portion (23), wherein
a projection portion (25) is provided on the distal end surface (23b) and protrudes toward the first side,
the projection portion (25) is arranged at a predetermined position on the inner member (20) in a longitudinal direction, and
the projection portion (25) is configured to be heated and melted through current concentration when a resistance welding is performed, and the distal end surface (23b) and a facing portion of the folded portion (12; 62; 74) are pressure-bonded to each other,
the intermediary member of a vehicle door frame being **characterized in that**
the return portion (14; 64; 71; 72) is configured to raise the portion that is closer to the basal end portion (11d; 61b) than the folded portion (12; 62; 74) of the glass-run housing portion (11; 61) in a flat manner to a position on a vehicle outer side away from the position of the first-side end (12b; 62a; 74a) of the folded portion (12; 62; 74).

## Patentansprüche

1. Fahrzeugtürrahmen, umfassend:
ein Außenelement (10; 60), welches eine Glaslaufgehäusesektion (11; 61) bildet, die aus einer Platte hergestellt ist, wobei das Außenelement (10; 60) eine Basisendsektion (11d; 61b) aufweist und sich an einer ersten Seite befindet,
ein Innenelement (20), das aus einer Platte hergestellt ist, die eine Körpersektion (22) umfasst, welche ein Rahmengestell eines Fensterrahmens bildet, wobei das Innenelement (20) mit dem Außenelement (10; 60) an einer zweiten Seite gekoppelt ist, die der ersten Seite gegenüberliegt, wobei
das Außenelement (10; 60) beinhaltet
eine Randsektion, welche die Glaslaufgehäusesektion (11; 61) an einer Position bildet, die von der Basisendsektion (11d; 61b) getrennt ist,
eine gefalzte Sektion (12; 62; 74), welche an der Randsektion vorgesehen ist und einen im Wesentlichen U-förmigen Querschnitt aufweist, wobei die gefalzte Sektion (12; 62; 74) eine Öffnung (13; 63), welche zu der zweiten Seite öffnet, und ein erstseitiges Ende (12b; 62a; 74a), das der ersten Seite am nächsten positioniert ist, beinhaltet, und
eine Umkehrsektion (14; 64; 71; 72), die an einer Position vorgesehen ist, die näher zu der Basisendsektion (11d; 61b) als die gefalzte Sektion (12; 62; 74) der Glaslaufgehäusesektion (11; 61) ist,
das Innenelement (20) beinhaltet
eine verlängerte Sektion (23), welche auf der Körpersektion (22) vorgesehen ist und sich auf der ersten Seite erstreckt,
eine Randsektion (23a), welche auf der verlängerten Sektion (23) vorgesehen ist und dazu ausgestaltet ist, in die Öffnung (13; 63) der gefalzten Sektion (12; 62; 74) eingesetzt zu werden, und
eine distale Endfläche (23b), welche auf der Randsektion (23a) der verlängerten Sektion (23) vorgesehen ist, wobei
eine Vorsprungsektion (25) an der distalen Endfläche (23b) vorgesehen ist und zu der ersten Seite hin herausragt,
die Vorsprungsektion (25) an einer vorbestimmten Position an dem Innenelement (20) in einer Längsrichtung angeordnet ist, und
die Vorsprungsektion (25) dazu ausgestaltet ist, durch Stromkonzentration erwärmt und geschmolzen zu werden, wenn ein Widerstandsschweißen durchgeführt wird, und die distale Endfläche (23b) und eine ihr zugewandte Sektion der gefalzten Sektion (12; 62; 74) miteinander druckverklebt werden,
der Fahrzeugtürrahmen **dadurch gekennzeichnet ist, dass**
die Umkehrsektion (14; 64; 71; 72) dazu ausgestaltet ist, die Sektion, die näher zu der Basisendsektion (11d; 61b) als die gefalzte Sektion (12; 62; 74) der Glaslaufgehäusesektion (11; 61) ist, in einer flachen Weise auf eine Position an einer Fahzeugaußenseite entfernt von der Position des erstseitigen Endes (12b; 62a; 74a) der gefalzten Sektion (12; 62; 74) anzuheben.

2. Fahrzeugtürrahmen nach Anspruch 1, wobei die Glaslaufgehäusesektion (11; 61) eine Kopplungssektion (66) umfasst, welche einen Kanal (65) mit einer Sektion koppelt, die näher zu der Basisendsektion (11d; 61b) als die gefalzte Sektion (12, 62) der Glaslaufgehäusesektion (11; 61) ist, wobei der Kanal (65) dazu ausgestaltet ist, eine Bewegung eines Türfensterglases, das an dem Fensterrahmen vorgesehen ist, in einer öffenbaren und schließbaren Weise zu führen.

3. Fahrzeugtürrahmen nach Anspruch 1 oder 2, wobei die Umkehrsektion (71) dazu ausgestaltet ist, die Sektion, die näher zu der Basisendsektion (11d; 61b) als die gefalzte Sektion (12, 62) ist, auf eine Position an einer Fahrzeugaußenseite anzuheben, die entfernt von der Position des erstseitigen Endes (12b; 62a) der gefalzten Sektion (12, 62) in einem Zustand ist, in welchem die Umkehrsektion (71) mit der gefalzten Sektion (12,62) geschichtet ist.

4. Fahrzeugtürrahmen nach einem der Ansprüche 1 bis 3, wobei das Außenelement (10; 60) eine Glaslaufgehäusesektion (11; 61) mit einem im Wesentlichen L-förmigen Querschnitt aufweist.

5. Fahrzeugtürrahmen nach einem der Ansprüche 1 bis 4, wobei sich die Umkehrsektion (72) zu der ersten Seite hin von einem Startpunkt erstreckt, der eine Position ist, die von der gefalzten Sektion (12, 62) zu der Basisendsektion (11d; 61b) hin versetzt ist.

6. Fahrzeugtürrahmen nach einem der Ansprüche 1 bis 5, wobei sich die gefalzte Sektion (74) in einer Richtung erstreckt, in welcher eine Breite der Öffnung (13; 63) derart vergrößert wird, dass zwischen der gefalzten Sektion (74) und der verlängerten Sektion (23) ein Spalt definiert ist.

7. Zwischenelement eines Fahrzeugtürrahmens, umfassend:
ein Außenelement (10; 60), welches eine Glaslaufgehäusesektion (11; 61) bildet, die aus einer Platte hergestellt ist, wobei das Außenelement (10; 60) eine Basisendsektion (11d; 61b) aufweist und sich an einer ersten Seite befindet,
ein Innenelement (20), das aus einer Platte hergestellt ist, die eine Körpersektion (22) beinhaltet, welche ein Rahmengestell eines Fensterrahmens bildet, wobei das Innenelement (20) mit dem Außenelement (10; 60) an einer zweiten Seite gekoppelt ist, die der ersten Seite gegenüberliegt, wobei
das Außenelement (10; 60) beinhaltet
eine Randsektion, welche die Glaslaufgehäusesektion (11; 61) an einer Position bildet, die von der Basisendsektion (11d; 61b) getrennt ist,
eine gefalzte Sektion (12; 62; 74), welche an der Randsektion vorgesehen ist und einen im Wesentlichen U-förmigen Querschnitt aufweist, wobei die gefalzte Sektion (12; 62; 74) eine Öffnung (13; 63), welche zu der zweiten Seite öffnet, und ein erstseitiges Ende (12b; 62a; 74a), das der ersten Seite am nächsten positioniert ist, beinhaltet, und
eine Umkehrsektion (14; 64; 71; 72), die an einer Position vorgesehen ist, die näher zu der Basisendsektion (11d; 61b) als die gefalzte Sektion (12; 62; 74) der Glaslaufgehäusesektion (11; 61) ist,
das Innenelement (10; 20) beinhaltet
eine verlängerte Sektion (23), welche auf der Körpersektion (22) vorgesehen ist und sich auf der ersten Seite erstreckt,
eine Randsektion (23a), welche auf der verlängerten Sektion (23) vorgesehen ist und dazu ausgestaltet ist, in die Öffnung (13; 63) der gefalzten Sektion (12; 62; 74) eingesetzt zu werden, und
eine distale Endfläche (23b), welche auf der Randsektion (23a) der verlängerten Sektion (23) vorgesehen ist, wobei
eine Vorsprungsektion (25) an der distalen Endfläche (23b) vorgesehen ist und zu der ersten Seite hin herausragt,
die Vorsprungsektion (25) an einer vorbestimmten Position des Innenelements (20) in einer Längsrichtung angeordnet ist, und
die Vorsprungsektion (25) dazu ausgestaltet ist, durch Stromkonzentration erwärmt und geschmolzen zu werden, wenn ein Widerstandsschweißen durchgeführt wird, und die distale Endfläche (23b) und eine ihr zugewandte Sektion der gefalzten Sektion (12; 62; 74) miteinander druckverklebt werden,
das Zwischenelement eines Fahrzeugtürrahmens **dadurch gekennzeichnet ist, dass**
die Umkehrsektion (14; 64; 71; 72) dazu ausgestaltet ist, die Sektion, die näher zu der Basisendsektion (11d; 61b) als die gefalzte Sektion (12; 62; 74) der Glaslaufgehäusesektion (11; 61) ist, in einer flachen Weise auf eine Position an einer Fahzeugaußenseite entfernt von der Position des erstseitigen Endes (12b; 62a; 74a) der gefalzten Sektion (12; 62; 74) anzuheben.

## Revendications

1. Cadre de porte de véhicule, comprenant :
un élément extérieur (10 ; 60), qui constitue une partie de logement de déplacement de vitre (11 ; 61) composée d'un panneau, l'élément extérieur (10 ; 60) ayant une partie d'extrémité de base (11d ; 61b) et se trouvant sur un premier côté ;
un élément intérieur (20) composé d'un panneau comprenant une partie de corps (22), qui forme une ossature d'un châssis de fenêtre, l'élément intérieur (20) étant relié à l'élément extérieur (10 ; 60) sur un deuxième côté qui est à l'opposé du premier côté,
l'élément extérieur (10 ; 60) comprenant
une partie de bord, qui constitue la partie de logement de déplacement de vitre (11 ; 61) dans une position qui est à l'écart de la partie d'extrémité de base (11d ; 61b),
une partie pliée (12 ; 62 ; 74), qui est prévue sur la partie de bord et a une section transversale sensiblement en forme de U, la partie pliée (12 ; 62 ; 74) comprenant une ouverture (13 ; 63), qui s'ouvre sur le deuxième côté, et une extrémité de premier côté (12b ; 62a ; 74a) qui est positionnée le plus près du premier côté, et
une partie de retour (14 ; 64 ; 71 ; 72) prévue dans une position qui est plus près de la partie d'extrémité de base (11d ; 61b) que la partie pliée (12 ; 62 ; 74) de la partie de logement de déplacement de vitre (11 ; 61),
l'élément intérieur (20) comprenant
une partie d'extension (23), qui est prévue sur la partie de corps (22) et s'étend sur le premier côté ;
une partie de bord (23a), qui est prévue sur la partie d'extension (23) et configurée pour être insérée dans l'ouverture (13 ; 63) de la partie pliée (12 ; 62 ; 74), et
une surface d'extrémité distale (23b), qui est prévue sur la partie de bord (23a) de la partie d'extension (23),
une partie de saillie (25) étant prévue sur la surface d'extrémité distale (23b) et dépassant vers le premier côté,
la partie de saillie (25) étant disposée dans une position prédéterminée sur l'élément intérieur (20) dans une direction longitudinale, et
la partie de saillie (25) étant configurée pour être chauffée et fondue par une concentration de courant quand un soudage par résistance est réalisé, et la surface d'extrémité distale (23b) et une partie en regard de la partie pliée (12 ; 62 ; 74) étant liées l'une à l'autre par pression,
le cadre de porte de véhicule étant **caractérisé en ce que**
la partie de retour (14 ; 64 ; 71 ; 72) est configurée pour soulever la partie qui est plus près de la partie d'extrémité de base (11d ; 61b) que la partie pliée (12 ; 62 ; 74) de la partie de logement de déplacement de vitre (11 ; 61) d'une manière plate vers une position sur un côté extérieur de véhicule par rapport à la position de l'extrémité de premier côté (12b ; 62a ; 74a) de la partie pliée (12 ; 62 ; 74).

2. Cadre de porte de véhicule selon la revendication 1, dans lequel la partie de logement de déplacement de vitre (11 ; 61) comprend une partie de couplage (66), qui relie un canal (65) avec une partie qui est plus près de la partie d'extrémité de base (11d ; 61b) que la partie pliée (12, 62) de la partie de logement de déplacement de vitre (11 ; 61), le canal (65) étant configuré pour guider un mouvement d'une vitre de fenêtre de porte prévue sur le châssis de fenêtre d'une manière pouvant être ouverte et fermée.

3. Cadre de porte de véhicule selon la revendication 1 ou 2, dans lequel la partie de retour (71) est configurée pour soulever la partie qui est plus près de la partie d'extrémité de base (11d ; 61b) que la partie pliée (12, 62) vers une position sur un côté extérieur de véhicule à l'écart de la position de l'extrémité de premier côté (12b ; 62a) de la partie pliée (12, 62) dans un état dans lequel la partie de retour (71) est stratifiée avec la partie pliée (12, 62).

4. Cadre de porte de véhicule selon l'une quelconque des revendications 1 à 3, dans lequel l'élément extérieur (10 ; 60) a une partie de logement de déplacement de vitre (11 ; 61) avec une section transversale sensiblement en forme de L.

5. Cadre de porte de véhicule selon l'une quelconque des revendications 1 à 4, dans lequel la partie de retour (72) s'étend vers le premier côté depuis un point de départ qui est une position qui est décalée par rapport à la partie pliée (12, 62) vers la partie d'extrémité de base (11d ; 61b).

6. Cadre de porte de véhicule selon l'une quelconque des revendications 1 à 5, dans lequel la partie pliée (74) s'étend dans une direction dans laquelle une largeur de l'ouverture (13 ; 63) est augmentée de telle sorte qu'un espace est défini entre la partie pliée (74) et la partie d'extension (23).

7. Elément intermédiaire d'un cadre de porte de véhicule, comprenant :
un élément extérieur (10 ; 60), qui constitue une partie de logement de déplacement de vitre (11 ; 61) composée d'un panneau, l'élément extérieur (10 ; 60) ayant une partie d'extrémité de base (11d ; 61b) et se trouvant sur un premier côté ;
un élément intérieur (20) composé d'un panneau comprenant une partie de corps (22), qui forme une ossature d'un châssis de fenêtre, l'élément intérieur (20) étant relié à l'élément extérieur (10 ; 60) sur un deuxième côté qui est à l'opposé du premier côté,
l'élément extérieur (10 ; 60) comprenant
une partie de bord, qui constitue la partie de logement de déplacement de vitre (11 ; 61) dans une position qui est à l'écart de la partie d'extrémité de base (11d ; 61b),
une partie pliée (12 ; 62 ; 74), qui est prévue sur la partie de bord et a une section transversale sensiblement en forme de U, la partie pliée (12 ; 62 ; 74) comprenant une ouverture (13 ; 63), qui s'ouvre sur le deuxième côté, et une extrémité de premier côté (12b ; 62a ; 74a) qui est positionnée le plus près du premier côté, et
une partie de retour (14 ; 64 ; 71 ; 72) prévue dans une position qui est plus près de la partie d'extrémité de base (11d ; 61b) que la partie pliée (12 ; 62 ; 74) de la partie de logement de déplacement de vitre (11 ; 61),
l'élément intérieur (20) comprenant
une partie d'extension (23), qui est prévue sur la partie de corps (22) et s'étend sur le premier côté ;
une partie de bord (23a), qui est prévue sur la partie d'extension (23) et configurée pour être insérée dans l'ouverture (13 ; 63) de la partie pliée (12 ; 62 ; 74), et
une surface d'extrémité distale (23b), qui est prévue sur la partie de bord (23a) de la partie d'extension (23),
une partie de saillie (25) étant prévue sur la surface d'extrémité distale (23b) et dépassant vers le premier côté,
la partie de saillie (25) étant disposée dans une position prédéterminée sur l'élément intérieur (20) dans une direction longitudinale, et
la partie de saillie (25) étant configurée pour être chauffée et fondue par une concentration de courant quand un soudage par résistance est réalisé, et la surface d'extrémité distale (23b) et une partie en regard de la partie pliée (12 ; 62 ; 74) étant liées l'une à l'autre par pression,
l'élément intermédiaire d'un cadre de porte de véhicule étant **caractérisé en ce que**
la partie de retour (14 ; 64 ; 71 ; 72) est configurée pour soulever la partie qui est plus près de la partie d'extrémité de base (11d ; 61b) que la partie pliée (12 ; 62 ; 74) de la partie de logement de déplacement de vitre (11 ; 61) d'une manière plate vers une position sur un côté extérieur de véhicule par rapport à la position de l'extrémité de premier côté (12b ; 62a ; 74a) de la partie pliée (12 ; 62 ; 74).
